# DEMANDE DE BREVET EUROPEEN

(11) **EP 4 782 198 A1**
(43) Date de publication de la demande: **29.07.2026**
(21) Numéro de dépôt: 25305089.2
(22) Date de dépôt: 24.01.2025
(51) Int. Cl.: B32B 3/12, B32B 5/02, B32B 7/12, B32B 27/32, B32B 27/34, B32B 27/36

(54) **DISPOSITIF D'ABSORPTION ACOUSTIQUE POUR ÉQUIPEMENT GÉNÉRATEUR DE BRUIT D'UN VÉHICULE AUTOMOBILE**

(71) Demandeur: HUTCHINSON, 75008 Paris (FR); Industrias Tecnicas de la Espuma SL, 01220 Armiñón (ES)
(72) Inventeur: LAFUENTE MEDINA, Luis Manuel, BURGOS (ES); GONZALEZ CASTILLO, Luis Miguel, BURGOS (ES); TANNEAU, Olivier, 93400 SAINT OUEN (FR)
(74) Mandataire: Gevers & Orès

(57) **Abrégé**

Dispositif (100) d'absorption acoustique pour un équipement générateur de bruit, tel un compresseur ou un moteur électrique, d'un véhicule automobile, ledit dispositif comprenant au moins :
- une première couche (10) configurée pour faire face et/ou être au contact d'une surface externe dudit équipement, ladite première couche étant un feutre non tissé ;
- une deuxième couche (20) recouvrant la première couche, ladite deuxième couche étant un matériau alvéolaire plastique ; et
- une couche intercalaire (30) assurant la liaison entre la première couche (10) et la deuxième couche (20).

## Description

### Domaine technique de l'invention

La présente invention concerne un dispositif d'absorption acoustique pour un équipement générateur de bruit, tel un compresseur, un moteur électrique ou tout autre organe auxiliaire source de bruit, d'un véhicule automobile.

### Arrière-plan technologique

Les véhicules automobiles comportent de nombreux équipements dont certains peuvent être source de vibrations et/ou de bruits, ce qui peut représenter une nuisance pour les occupants du véhicule, voire être une pollution sonore autour du véhicule, c'est-à-dire à l'extérieur de celui-ci.

Pour réduire ces nuisances, il est connu de placer l'équipement qui en est la source, par exemple un compresseur ou un moteur électrique, au sein d'un dispositif conçu pour amortir les vibrations et/ou les bruits.

L'évolution du secteur automobile rend nécessaire la recherche de solutions à la fois efficaces et économiques. Par ailleurs, il est aussi important que ces solutions présentent un impact le plus réduit possible sur l'environnement.

Un objectif de la présente invention est de proposer une solution qui réponde au moins en partie à ces critères.

### Résumé de l'invention

Il est donc proposé un dispositif d'absorption acoustique pour un équipement générateur de bruit, tel un compresseur ou un moteur électrique, d'un véhicule automobile, ce dispositif comprenant au moins :
- une première couche configurée pour faire face et/ou être au contact d'une surface externe dudit équipement, ladite première couche étant un feutre non tissé ;
- une deuxième couche recouvrant la première couche, ladite deuxième couche étant un matériau alvéolaire plastique ; et
- une couche intercalaire assurant la liaison entre la première couche et la deuxième couche.

Ainsi, grâce à l'invention, on assure un allègement du dispositif d'absorption acoustique tout en conservant des performances acoustiques similaires à celles de l'art antérieur. En effet, les matériaux alvéolaires et les feutres sont des matériaux poreux qui contribuent à réduire la masse du dispositif. La perte de masse est contrebalancée par la couche intercalaire qui, couplée avec les deux autres couches, i.e. de feutre et de matériau alvéolaire plastique, permet d'obtenir des performances acoustiques similaires à celle de dispositifs préexistants. En outre, le matériau alvéolaire et le feutre présentent des propriétés acoustiques qui favorisent l'absorption acoustique dans les hautes fréquences.

Le dispositif selon l'invention peut comprendre une ou plusieurs des caractéristiques ci-dessous, prises isolément les unes avec les autres ou en combinaison les unes avec les autres :
- la couche intercalaire est réalisée en un matériau élastomère ;
- la couche intercalaire est fixée d'une part à la première couche par un premier adhésif et à la deuxième couche par un second adhésif d'autre part ;
- la couche intercalaire est une peau réalisée en un matériau thermofusible qui est chimiquement compatible avec les première et deuxième couches ;
- la couche intercalaire comprend une peau qui est réalisée en un matériau thermofusible, chimiquement compatible avec la première couche, et une sous-couche qui est réalisée en un matériau thermoplastique élastomère, chimiquement compatible avec la deuxième couche, ou en un matériau élastomère.
- la première couche, la deuxième couche et la couche intercalaire en matériau thermofusible sont fixées ensemble par au moins un point de soudage ;
- la couche intercalaire présente une masse surfacique comprise entre 0,03 kg/m² et 2 kg/m² ;
- la couche intercalaire s'étend en partie sur une surface de la première couche et/ou en partie sur une surface de la deuxième couche ;
- le feutre non tissé est réalisé avec des fibres en polyéthylène téréphtalate (PET) ;
- la première couche présente des cellules ouvertes ;
- la deuxième couche en matériau alvéolaire comprend des cellules fermées ;
- le matériau alvéolaire plastique est une polyoléfine, par exemple un polypropylène (PP), un polyamide (PA) ou un polyéthylène téréphtalate (PET) ;
- la deuxième couche forme une coque destinée à recevoir l'équipement générateur de bruit, la coque comprenant au moins deux parties ;
- la coque est monobloc.

L'invention concerne également un véhicule automobile comprenant au moins un dispositif d'absorption acoustique tel que décrit dans ce qui précède.

### Brève description des figures

L'invention sera mieux comprise à l'aide de la description qui va suivre, donnée uniquement à titre d'exemple et faite en se référant aux dessins annexés dans lesquels :
La figure 1 représente une vue schématique en coupe d'une forme de réalisation d'un dispositif d'absorption acoustique selon l'invention, en particulier lorsque la couche intercalaire est réalisée en un matériau thermofusible,
La figure 2 représente une vue schématique en coupe d'une autre forme de réalisation d'un dispositif d'absorption acoustique selon l'invention, en particulier lorsque la couche intercalaire comprend une sous-couche en élastomère ou thermoplastique élastomère et une peau thermofusible,
La figure 3 représente une vue schématique en coupe d'une autre forme de réalisation du dispositif selon l'invention, en particulier lorsque les couches sont fixées entre elles par au moins un adhésif,
La figure 4 représente une vue schématique d'une autre forme de réalisation du dispositif selon l'invention, en particulier lorsque la deuxième couche forme une coque,
La figure 5 représente un graphique comparant le gain en décibel en fonction de la fréquence d'un dispositif d'absorption acoustique de référence avec le dispositif d'absorption acoustique selon l'invention.

### Description détaillée de l'invention

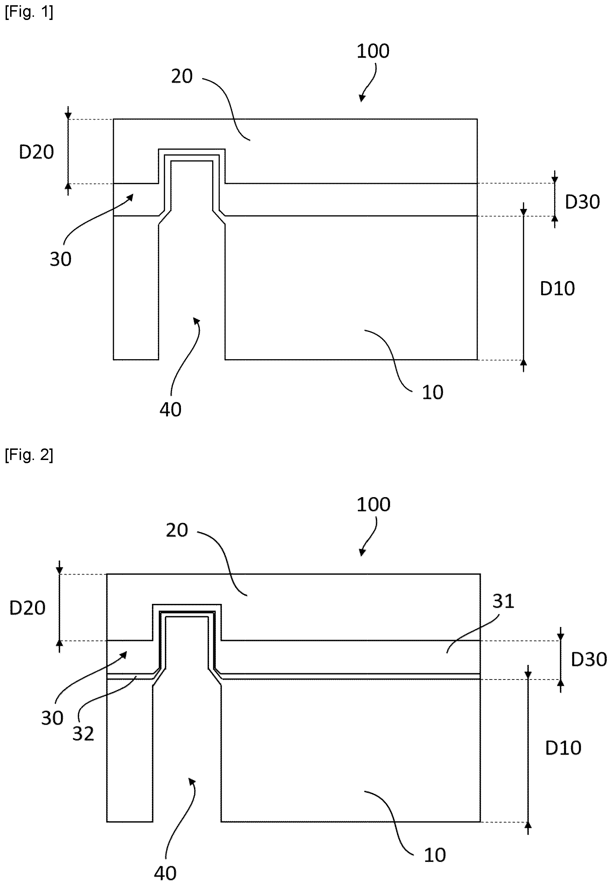

En référence aux figures 1 à 4, le dispositif 100, 100', 200 d'absorption acoustique, selon l'invention, pour un équipement 2 générateur de bruit d'un véhicule automobile comprend au moins une première couche 10 qui est configurée pour faire face et/ou être au contact d'une surface externe 4 de l'équipement 2 générateur de bruit et une deuxième couche 20 recouvrant la première couche 10. La première couche 10 est un feutre non tissé et la deuxième couche 20 est un matériau alvéolaire plastique, qui est communément appelé « mousse ». Le dispositif 100, 100', 200 comprend également une couche intercalaire 30 assurant la liaison entre la première couche 10 et la deuxième couche 20. On comprend que la couche intercalaire 30 est située entre la première couche 10 et la deuxième couche 20.

Le feutre et le matériau alvéolaire plastique sont des matériaux dont la structure est poreuse, pouvant généralement comprendre de l'air. Ce type de structure permet de contribuer à un allègement du dispositif. De préférence, le feutre est choisi de sorte à présenter une absorption acoustique dans les hautes fréquences.

De préférence encore, le matériau alvéolaire plastique comprend des cellules fermées. On comprend que la proportion de cellules fermées peut être majoritaire dans le matériau alvéolaire plastique. Cela permet de maintenir l'étanchéité à l'air de la deuxième couche 20, et ainsi obtenir de cette couche un comportement d'isolation acoustique en loi de masse.

Avantageusement, le feutre non tissé de la première couche 10 est réalisé avec des fibres thermoplastiques, par exemple en polyéthylène téréphtalate (PET). Ce matériau présente l'avantage d'être recyclable. De la sorte, en fin de vie du véhicule, et par conséquent une fin d'usage du dispositif 100, 100', 200 pour ce véhicule, la première couche 10 du dispositif 100, 100', 200 peut être revalorisée. Ce qui permet de réduire l'impact environnemental du dispositif 100, 100', 200. Par ailleurs, cela présente aussi l'avantage de permettre une revalorisation des chutes de la première couche 10 issues de la fabrication du dispositif 100, 100', 200.

La première couche 10 peut avoir une épaisseur D10 comprise entre 3 mm et 30 mm, et de préférence sensiblement comprise entre 7 mm et 20 mm, et plus préférentiellement sensiblement comprise entre 7 et 13 mm.

La première couche 10 peut avoir une masse volumique sensiblement comprise entre 5 kg/m³ et 100 kg/m³, de préférence sensiblement comprise entre 20 kg/m³ et 70 kg/m³, et encore plus préférentiellement sensiblement comprise entre 35 kg/m³ et 50 kg/m³.

L'épaisseur et la masse volumique de la première couche 10 permet de définir une masse surfacique qui représente un facteur important dans la loi de masse pour l'isolation phonique. En effet, plus la masse surfacique est élevée plus l'isolation acoustique est bonne, c'est-à-dire que l'absorption est élevée.

La première couche 10 peut avoir une résistivité au passage de l'air sensiblement comprise entre 5000 N.s.m⁻⁴ et 200000 N.s.m⁻⁴ (ou Rayl/m).

Avantageusement, le plastique formant le matériau alvéolaire de la deuxième couche 20 est réalisé en un matériau thermoplastique, par exemple en polyoléfine tel que le polypropylène (PP), le polyamide (PA) ou le polyéthylène téréphtalate (PET). Comme pour la première couche 10, ces matériaux présentent l'avantage d'être recyclable.

La deuxième couche 20 peut avoir une épaisseur D20 sensiblement comprise entre 1 mm et 10 mm, de préférence entre 2 mm et 8 mm, et encore plus préférentiellement sensiblement comprise entre 2 mm et 5 mm.

La deuxième couche 20 peut avoir une masse volumique sensiblement comprise entre 50 kg/m³ et 300 kg/m³, de préférence sensiblement comprise entre 100 kg/m³ et 200 kg/m³, et encore plus préférentiellement sensiblement comprise entre 125 kg/m³ et 175 kg/m³.

Comme pour la première couche 10, l'épaisseur et la masse volumique de la deuxième couche 20 permet de définir une masse surfacique. Plus la masse surfacique est élevée plus l'isolation acoustique est bonne, c'est-à-dire que l'absorption est élevée.

La couche intercalaire 30 qui est située entre la première couche 10 et la deuxième couche 20 peut s'étendre de manière continue entre la première couche 10 et la deuxième couche 20. On comprend que la couche intercalaire 30 couvre sensiblement toute la surface de la première couche 10 et sensiblement toute la surface de la deuxième couche 20.

En variante, la couche intercalaire 30 est discontinue et ne couvre qu'en partie la surface de la première couche 10 et/ou de la deuxième couche 20. De la sorte, la performance acoustique peut être améliorée en des points précis du dispositif 100, 100', 200 sans en impacter la masse de manière globale. En effet, l'équipement 2 destiné à être reçu par le dispositif 100, 100', 200 est un objet en trois dimensions et les bruits sont donc émis dans ces trois dimensions. Aussi, les bruits peuvent être plus ou moins forts selon les directions de l'espace. La couche intercalaire 30 peut donc être positionnée de manière discontinue entre les première et deuxième couches 10, 20 de sorte à atténuer les bruits dans des directions données. Autrement dit, on améliore l'absorption acoustique dans les directions où les bruits sont les plus élevés par un gain de masse local sans pour autant alourdir le dispositif 100, 100', 200 aux endroits où les bruits sont les moins élevés.

La couche intercalaire 30 peut avoir une épaisseur D30 sensiblement comprise entre 0,1 mm et 5 mm, de préférence sensiblement comprise entre 0,3 mm et 2 mm.

La couche intercalaire 30 peut avoir une masse surfacique sensiblement comprise entre 0,03 kg/m² et 4 kg/m², de préférence sensiblement comprise entre 0,03 kg/m² et 2 kg/m².

En référence à la figure 1, la couche intercalaire 30 peut être réalisée en un matériau thermofusible. On entend par « thermofusible » ce qui est susceptible de fondre sous l'effet de la chaleur. Ce matériau thermofusible peut être conformable aux première et deuxième couches 10, 20, c'est-à-dire que la couche intercalaire 30 peut s'adapter à la forme prise par la première couche 10 et la deuxième couche 20, entre lesquelles elle est située. Le matériau thermofusible est par ailleurs choisi pour être chimiquement compatible avec la première couche 10 d'une part et la deuxième couche 20 d'autre part. De préférence, le matériau thermofusible est un matériau thermoplastique, comme le PP ou le PET, ou un matériau thermoplastique élastomère (TPE).

La figure 2 montre que la couche intercalaire 30 peut comprendre une sous-couche 31 et une peau 32. La sous-couche 31 peut être réalisée en un matériau thermoplastique élastomère, chimiquement compatible avec la deuxième couche 20. La peau 32 peut être réalisée en un matériau thermofusible, chimiquement compatible avec la première couche 10. La sous-couche 31 est configurée pour faire face à la deuxième couche 20 tandis que la peau 32 est configurée pour faire face à la première couche 10.

En variante, la sous-couche 31 peut être en matériau élastomère, par exemple en éthylène-propylène-diène monomère (EPDM).

La peau 32 peut présenter une compacité qui est sensiblement supérieure à celle de la première couche 10. Cela permet d'une part un gain de masse local et, d'autre part, cela permet une accroche plus facile entre la première la couche 10 et une autre couche. Par exemple, la peau 32 peut être en un matériau non-tissé. La peau 32 peut être réalisée en PP ou PET.

Prises individuellement, la sous-couche 31 et la peau 32 dans la couche intercalaire 30 peuvent avoir des masses surfaciques différentes.

De préférence, la sous-couche 31 présente une masse surfacique sensiblement comprise entre 0,3 kg/m² et 2 kg/m², et plus préférentiellement sensiblement comprise entre 0,5 et 0,8 kg/m².

De préférence encore, la sous-couche 31 a une épaisseur comprise entre 0,3 mm et 2 mm.

La peau 32, elle, présente de préférence une masse surfacique sensiblement comprise entre 0,03 kg/m² et 0,2 kg/m², et de préférence sensiblement comprise entre 0,04 et 0,08 kg/m².

De préférence, la peau 32 a une épaisseur comprise entre 0,2 mm et 1 mm, et de préférence comprise entre 0,4 mm et 0,7 mm.

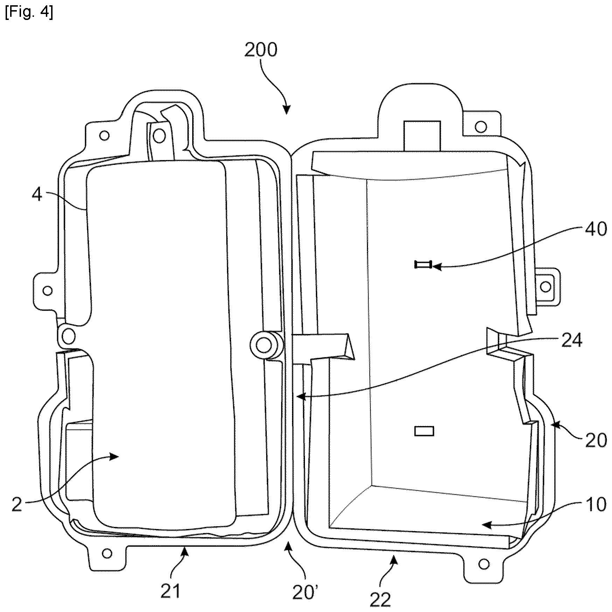

Dans les exemples des figures 1 ou 2, pour fixer les différentes couches entre elles, la première couche 10, la deuxième couche 20 et la couche intercalaire 30 peuvent être liées entre elles par au moins un point de soudage 40 localisé, de préférence au moins deux points de soudage 40, comme visible sur la figure 4. Les points de soudage 40 sont localisés afin d'assurer une fixation optimale. Le soudage par points des couches 10, 20, 30 peut être facilité lorsque les couches 10, 20, 30 sont proches chimiquement, autrement dit compatibles. C'est par exemple le cas avec un feutre thermoplastique, une couche intercalaire thermofusible et un matériau alvéolaire thermoplastique. Par ailleurs, le soudage par points présente l'avantage de ne pas nécessiter d'ajout de matière pour réaliser la fixation puisqu'il consiste en une fusion des couches en un point.

Afin d'éviter la compression de la première couche 10 lors de l'opération de soudage par point, le nombre de points de soudage 40 doit être minimal. En effet, en comprimant la première couche 10 en feutre, ses propriétés d'absorption acoustique diminue. Aussi, avec un nombre minimal de points de soudage 40, on garantit la fixation des couches 10, 20, 30 ensemble tout en conservant les propriétés d'absorption acoustique de la première couche 10.

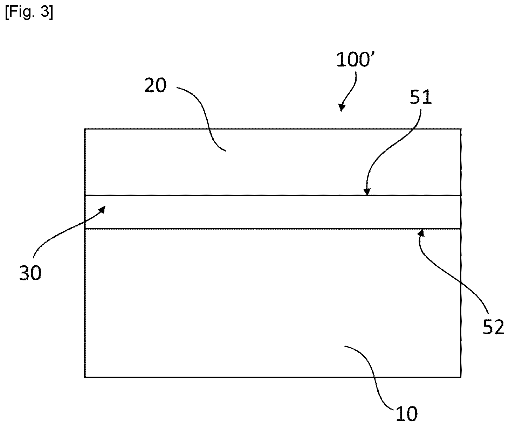

Dans une autre forme de réalisation, représentée sur la figure 3, la couche intercalaire 30 peut être réalisée en un matériau élastomère. Ce matériau élastomère est par ailleurs conformable aux premières et deuxième couches 10, 20. Le matériau élastomère peut être réalisé en éthylène-propylène-diène monomère (EPDM) ou ses dérivés ou en un matériau similaire.

Avec un matériau élastomère, la couche intercalaire 30 peut être fixée d'une part à la première couche 10 par un premier adhésif 51 et à la deuxième couche 20 par un second adhésif 52. Le premier adhésif 51 et/ou le second adhésif 52 peuvent être sous forme d'une couche, d'une bande ou de points localisés. Le premier adhésif 51 et le second adhésif 52 peuvent être de même nature. Dans certains cas, la couche intercalaire 30 en élastomère peut être soudée aux autres couches.

Lorsque la couche intercalaire 30 est réalisée ou comprend un matériau élastomère, comme la sous-couche 31 de la figure 2, le matériau élastomère est fixé aux couches attenantes par des adhésifs 51, 52.

En référence à la figure 4, le dispositif 200 comprend une première couche 10, une deuxième couche 20 et une couche intercalaire 30 telles que décrites dans ce qui précède.

Dans le dispositif 200, la deuxième couche 20 forme une coque 20'. La coque 20' est destinée à recevoir l'équipement 2 générateur de bruit qui peut être, de manière non limitative, un compresseur, un moteur électrique ou tout autre organe auxiliaire source de bruit dans un véhicule automobile.

La coque 20' peut comprendre au moins deux parties 21, 22.

Avantageusement, la coque 20' est monobloc, c'est-à-dire formée d'une seule pièce. Les deux parties 21, 22 sont alors reliées entre elles. Ces deux parties 21, 22 peuvent être reliées en elles par une charnière 24. On comprend que la charnière 24 fait partie intégrante de la coque 20'. Cela facilite l'installation ou le retrait du dispositif autour de l'équipement 2.

En variante, les deux parties 21, 22 de la coque peuvent être distinctes l'une de l'autre.

Pour maintenir fermer la coque 20', le dispositif 200 est équipé d'au moins un système de verrouillage pour maintenir fermer le dispositif autour de l'équipement 2 générateur de bruit.

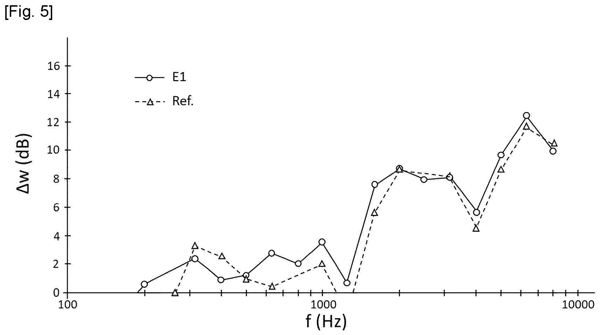

Dans cette configuration, la couche intercalaire 30 et la première couche 10 sont placées dans la coque 20' et fixée à la deuxième couche 20. Dans l'exemple représenté par la figure 5, deux points de soudage 40 permettent de fixer aux autres couches un morceau de première couche 10 dans la partie 22 de la coque 20', tandis qu'un autre morceau de première couche 10 est fixé aux autres couches de manière similaire dans la partie 21 de la coque 20'.

Dans cet exemple, la première couche 10 est découpée pour se conformer à la forme prise par la coque 20', c'est-à-dire la deuxième couche 20. Selon la forme adoptée par la coquée 20', la première couche 10 peut être découpée en plusieurs pans séparés au sein d'une même partie 21, 22 de la coque 20'.

On notera par ailleurs que les matériaux utilisés pour le dispositif 100, 100', 200 répondent également à d'autres critères tels qu'une résistance aux liquides, une résistance à la corrosion ou une faible conductivité thermique. Ces critères sont requis pour protéger l'équipement 2 à l'intérieur du dispositif 100, 100', 200.

Le procédé de fabrication du dispositif d'absorption acoustique 100, 100', 200 tel que décrit précédemment est brièvement décrit dans ce qui suit.

Au préalable, la deuxième couche 20 en matériau alvéolaire plastique est thermoformée pour adopter une forme prédéterminée. Cette forme prédéterminée correspond sensiblement à la forme de l'équipement 2 générateur de bruit.

La première couche 10 en feutre non tissé est découpée dans une nappe selon un patron prédéfini.

La couche intercalaire 30 est découpée selon une forme prédéfinie.

La couche intercalaire 30 est installée sur/dans la deuxième couche 20 thermoformée puis la première couche 10 est installée de telle sorte qu'elle recouvre la couche intercalaire 30.

La première couche 10, la deuxième couche 20 et la couche intercalaire sont alors liées entre elles. Cette liaison peut être assurée par un adhésif ou par au moins un point de soudage comme décrit précédemment.

Le dispositif d'absorption acoustique est ensuite monté autour d'un équipement 2 générateur de bruit de sorte que la première couche 10 soit face et/ou au contact d'une surface externe 4 de l'équipement 2 générateur de bruit.

### Test comparatif :

On se réfère à présent à la figure 5 qui montre une comparaison de l'évolution du gain Δw en décibel (dB) en fonction de la fréquence, en Hertz (Hz), pour un dispositif d'absorption acoustique existant (symbole triangle et courbe en trait pointillé) et un dispositif d'absorption acoustique selon l'invention (symbole cercle et courbe en trait plein). Il est à noter que l'axe des abscisses à une échelle logarithmique. On entend par gain Δw en décibel, la différence entre une mesure faite sans le dispositif d'absorption acoustique, c'est-à-dire avec l'équipement générateur de bruit seul, et une mesure faire avec le dispositif d'absorption acoustique monté autour de l'équipement générateur de bruit.

Le dispositif d'absorption acoustique existant, aussi appelé référence, est un dispositif formé d'une seule couche d'un matériau alvéolaire réalisé en polyuréthane (PU) dont l'épaisseur est comprise entre 10 et 20 mm. Ce dispositif de référence présente alors une masse d'environ 514 grammes.

Le dispositif d'absorption acoustique selon l'invention est tel que décrit dans ce qui précède. En particulier, le dispositif, noté E1, comprend une première couche 10 en feutre en PET de 10 mm d'épaisseur, une deuxième couche 20 de matériau alvéolaire en PP de 3 mm d'épaisseur et une couche intercalaire 30 en-élastomère EPDM. La couche 10 en feutre PET a une masse surface sensiblement égale à 455 g/m², la couche 20 de matériau alvéolaire PP a une masse surfacique sensiblement égale à 450 g/m² et la couche intercalaire 30 élastomère a une masse surfacique sensiblement égale à 630 g/m². Ce dispositif E1 présente alors une masse totale d'environ 275 grammes.

Ainsi, il apparaît que le dispositif selon l'invention présente des performances acoustiques similaires au dispositif de référence, en particulier à partir d'environ 1,6 kHz vers les hautes fréquences où le gain moyen est d'environ 9 dB. Les performances acoustiques sont donc similaires et ce avec une masse significativement inférieure pour la dispositif selon l'invention.

L'invention concerne également un véhicule automobile comportant au moins un dispositif d'absorption acoustique tel que décrit dans ce qui précède.

À la lumière de ce qui a été décrit précédemment, l'invention présente l'avantage d'assurer un allègement du dispositif d'absorption acoustique tout en conservant des performances acoustiques similaires à celles de l'art antérieur. En effet, les matériaux alvéolaires et les feutres sont des matériaux poreux qui contribuent à réduire la masse du dispositif. La perte de masse est contrebalancée par la couche intercalaire qui, couplée avec les deux autres couches, i.e. de feutre et de matériau alvéolaire plastique, permet d'obtenir des performances acoustiques similaires à celle de dispositifs préexistants. En outre, le matériau alvéolaire et le feutre présentent des propriétés acoustiques qui favorisent l'absorption acoustique dans les hautes fréquences.

Un autre avantage avec l'utilisation de matériau alvéolaire et de feutre est la flexibilité conférée au produit. Cela permet de faciliter le montage sur le compresseur et de rattraper les jeux disponibles.

Un autre avantage de l'invention, en particulier lorsque le feutre est en PET et/ou le matériau alvéolaire est en PET, PP ou PA, est d'améliorer la recyclabilité du dispositif, et donc réduire son impact environnemental.

## Revendications

1. Dispositif (100, 100', 200) d'absorption acoustique pour un équipement (2) générateur de bruit, tel un compresseur ou un moteur électrique, d'un véhicule automobile, ledit dispositif comprenant au moins :
- une première couche (10) configurée pour faire face et/ou être au contact d'une surface externe (4) dudit équipement (2), ladite première couche (10) étant un feutre non tissé ;
- une deuxième couche (20) recouvrant la première couche, ladite deuxième couche (20) étant un matériau alvéolaire plastique ; et
- une couche intercalaire (30, 31, 32) assurant la liaison entre la première couche (10) et la deuxième couche (20).

2. Dispositif (100, 100', 200) selon la revendication 1, dans lequel ladite couche intercalaire (30, 31) est réalisée en un matériau élastomère.

3. Dispositif (100, 100', 200) selon la revendication 2, dans lequel la couche intercalaire (30) est fixée d'une part à la première couche (10) par un premier adhésif (51) et à la deuxième couche (20) par un second adhésif (52) d'autre part.

4. Dispositif (100, 100', 200) selon la revendication 1, dans lequel ladite couche intercalaire (30) est une peau (32) réalisée en un matériau thermofusible qui est chimiquement compatible avec lesdites première et deuxième couches.

5. Dispositif (100, 100', 200) selon la revendication 1, dans lequel ladite couche intercalaire (30) comprend :
- une peau (32) qui est réalisée en un matériau thermofusible, chimiquement compatible avec la première couche (10), et
- une sous-couche (31) qui est réalisée en un matériau thermoplastique élastomère, chimiquement compatible avec la deuxième couche (20), ou en un matériau élastomère.

6. Dispositif (100', 200) l'une quelconque des revendications 4 ou 5, dans lequel la première couche (10), la deuxième couche (20) et la couche intercalaire (30) en matériau thermofusible sont fixées ensemble par au moins un point de soudage (40).

7. Dispositif (100, 100', 200) selon l'une quelconques des revendications 1 à 6, dans lequel ladite couche intercalaire (30) présente une masse surfacique comprise entre 0,03 kg/m² et 2 kg/m².

8. Dispositif (100, 100', 200) selon l'une quelconque des revendications 1 à 7, dans lequel ladite couche intercalaire (30) s'étend en partie sur une surface de la première couche (10) et/ou en partie sur une surface de la deuxième couche (20).

9. Dispositif (100, 100', 200) selon l'une quelconque des revendications 1 à 8, dans lequel le feutre non tissé est réalisé avec des fibres en polyéthylène téréphtalate (PET).

10. Dispositif (100, 100', 200) selon l'une quelconque des revendications 1 à 9, dans lequel la première couche (10) présente des cellules ouvertes.

11. Dispositif (100, 100', 200) selon l'une quelconque des revendications 1 à 10, dans lequel la deuxième couche (20) en matériau alvéolaire comprend des cellules fermées.

12. Dispositif (100, 100', 200) selon l'une quelconque des revendications 1 à 11, dans lequel le matériau alvéolaire plastique est une polyoléfine, par exemple un polypropylène (PP), un polyamide (PA) ou un polyéthylène téréphtalate (PET).

13. Dispositif (100, 100', 200) selon l'une quelconque des revendications 1 à 12, dans lequel la deuxième couche forme une coque (20') destinée à recevoir ledit équipement (2) générateur de bruit, ladite coque (20') comprenant au moins deux parties (21, 22).

14. Dispositif (100, 100', 200) selon la revendication 13, dans lequel ladite coque (20') est monobloc.

15. Véhicule automobile comportant au moins un dispositif (100, 100', 200) d'absorption acoustique selon l'une quelconque des revendications 1 à 14.
